# FASCICULE DE BREVET EUROPEEN

(11) **EP 1 460 606 B1**
(45) Date de publication et mention de la délivrance du brevet: **26.04.2006**
(21) Numéro de dépôt: 04352001.4
(22) Date de dépôt: 03.02.2004
(51) Int. Cl.: G09B 9/08, B23Q 7/00, B23Q 37/00

(54) **Dispositif pour le déplacement d'une machine entre plusieurs postes de travail**
Vorrichtung zum Transportieren einer Maschine zwischen mehreren Arbeitstationen
Device for moving a machine between a plurality of working stations

(30) Priorité: 05.03.2003 FR 0302685
(43) Date de publication de la demande: 22.09.2004
(73) Titulaire: AIRBUS France, 31060 Toulouse (FR)
(72) Inventeur: Bocquet, Philippe, 31820 Pibrac (FR); Miquel, Brice, 31200 Toulouse (FR)
(74) Mandataire: Hartmann, Jean-Luc

(56) Documents cités:
- DE-A- 2 838 686
- FR-A- 2 688 728
- US-A- 4 536 690
- US-A- 4 664 590

## Description

La présente invention concerne un dispositif pour le déplacement d'une machine ou similaire entre plusieurs postes de travail selon le préambule de la revendication 1 (voir, par exemple, US-A-4,664,590). Elle trouve par exemple une application dans le domaine des simulateurs de vol. Un tel simulateur comporte généralement d'une part un cockpit reproduisant à l'échelle 1 un poste de pilotage d'avion et d'autre part un système de visualisation de l'environnement extérieur, appelé visuel, placé face au cockpit et comportant un écran sur lequel sont projetées des images de synthèse gérées par ordinateur en fonction des manoeuvres effectuées par les utilisateurs se trouvant dans le cockpit. Dans ce cas, la machine à déplacer est un visuel et chaque poste de travail correspond à un cockpit.

Il a en effet été constaté que lorsque plusieurs simulateurs de vol sont regroupés dans un même bâtiment, tous les simulateurs ne fonctionnent pas simultanément. En outre, certaines opérations de simulation ne nécessitent pas le visuel. L'idée à l'origine de la présente invention est donc de partager un même visuel entre plusieurs cockpits de simulateurs de vol. En fonction du nombre de simulateurs regroupés dans le bâtiment, on peut prévoir deux (ou plus encore) visuels partagés entre les cockpits correspondants.

Le problème technique à résoudre était alors celui du déplacement d'une masse importante, de l'ordre de plusieurs tonnes (10³ kg), entre plusieurs postes fixes, en assurant une alimentation en énergie électrique de la masse déplacée durant son déplacement. Il faut de préférence prévoir aussi le cas de plusieurs masses à déplacer successivement, correspondant au partage de plusieurs visuels entre les cockpits de simulateurs correspondants. Le même problème peut se poser dans l'industrie si l'on souhaite déplacer une machine-outil entre divers postes de travail, par exemple une machine devant maintenir une pièce dans des conditions de température données durant son déplacement entre divers postes d'usinage.

La présente invention a alors pour but de résoudre ce problème technique, c'est-à-dire de fournir des moyens permettant de déplacer une masse importante en l'alimentant électriquement durant son déplacement et en la guidant pour venir la placer précisément face à divers postes de travail.

À cet effet, elle propose un dispositif pour le déplacement d'une machine ou similaire entre plusieurs postes de travail, tel que défini à la revendication 1.

Le dispositif tel que défini ci-dessus permet de déplacer la machine en l'alimentant électriquement. Ainsi, la machine déplacée est alimentée en permanence (à l'exception de microcoupures éventuelles). Le fait de mettre la machine en sustentation permet de limiter considérablement les efforts pour déplacer la machine et permet une grande souplesse de manipulation que n'offrent pas des systèmes à roues, même lorsque toutes les roues sont directionnelles.

Dans un dispositif pour le déplacement d'une machine ou similaire selon l'invention, les moyens de sustentation comportent de préférence des coussins d'air. Le nombre de coussins d'air est déterminé par la géométrie de la machine, par les performances des coussins d'air utilisés et aussi par la masse de la machine à déplacer. On remarque que les coussins d'air ne sont utilisés que lors d'un déplacement. De ce fait on prévoit avantageusement que ces coussins d'air sont alimentés en air comprimé par l'intermédiaire des moyens de guidage.

Les moyens de guidage utilisés sont de préférence des moyens de guidage aériens et comportent par exemple un chariot monté sur un pont roulant. De tels moyens de guidage permettent de laisser libre le sol de l'espace dans lequel se déplace la machine. Pour obtenir une bonne précision dans le déplacement du chariot par rapport au pont roulant, ce dernier est avantageusement muni de repères régulièrement disposés sur celui-ci et le chariot comporte alors un lecteur coopérant avec les repères pour lire la position du chariot sur le pont roulant. Ces repères sont par exemple des codes barres disposés sur toute la longueur du pont roulant. De même pour le positionnement du pont roulant par rapport au bâtiment, le pont roulant est par exemple monté coulissant sur deux rails sensiblement parallèles, chaque rail est de préférence muni de repères régulièrement disposés sur celui-ci et le pont roulant comporte un lecteur face à chaque rail, chaque lecteur coopérant avec les repères correspondant pour lire la position du pont roulant par rapport au rail correspondant. Ici aussi, les repères utilisés sont par exemple des codes barres.

Dans le cas où le dispositif pour le déplacement d'une machine ou similaire selon l'invention comporte un pont roulant sur lequel se déplace un chariot, le pont roulant est avantageusement alimenté en énergie électrique par un système comportant d'une part un conducteur sous tension s'étendant longitudinalement par rapport au déplacement du pont roulant et d'autre part un frotteur solidaire du pont roulant et en contact permanent avec le conducteur sous tension. Un tel système permet d'éviter la gestion d'une guirlande de câbles électriques. Cela est avantageux, notamment lorsque plusieurs machines ou similaires peuvent être déplacées entre différents postes de travail. Dans ce cas, l'utilisation de guirlandes de câbles électriques est de préférence évitée car elle pourrait aboutir à des croisements desdites guirlandes de câbles électriques qui seraient alors entremêlées.

Dans la mesure où un pont roulant et son chariot associé sont utilisés, on peut prévoir que les moyens de connexion pour la connexion électrique de la machine aux moyens de guidage aériens comportent d'une part un premier connecteur disposé sur la machine et d'autre part un second connecteur destiné à coopérer avec le premier connecteur et disposé sur le chariot monté sur le pont roulant, que le premier connecteur est fixe sur la machine, et que le second connecteur est mobile sur le chariot entre une première position dans laquelle il est connecté avec le premier connecteur lorsque les deux connecteurs sont face à face et une seconde position dans laquelle il est éloigné du premier connecteur, la direction de déplacement du second connecteur étant sensiblement perpendiculaire au plan de jonction des deux connecteurs.

Les moyens de liaison mécanique comportent par exemple d'une part un verrou de liaison vertical et d'autre part un logement de forme correspondant à celle du verrou de liaison pour recevoir celui-ci, le verrou de liaison vertical étant avantageusement disposé sur les moyens de guidage et le logement sur la machine, ou inversement, et des moyens étant prévus pour réaliser un déplacement relatif du verrou de liaison par rapport à son logement, dans une direction verticale, permettant ainsi au verrou de liaison de rentrer ou sortir de son logement lorsque le verrou de liaison est aligné verticalement avec son logement. Dans cette forme de réalisation, les moyens de liaison mécanique comportent avantageusement en outre des moyens de positionnement présentant d'une part un galet de positionnement et d'autre part un logement en forme de V destiné à recevoir le galet de positionnement. Le galet de positionnement est ici solidaire des moyens de guidage et le logement en V est solidaire de la machine, ou inversement. Dans cette dernière variante de réalisation, le galet de positionnement est de préférence mobile entre une position relevée et une position abaissée dans laquelle il peut coopérer avec le logement en forme de V pour réaliser le positionnement des moyens de guidage par rapport à la machine. Les moyens de liaison mécanique comportent en outre de préférence des moyens d'alignement comportant d'une part des parois de guidage convergentes et d'autre part un galet d'alignement destiné à se déplacer entre les parois de guidage. La distance minimale entre les parois de guidage précitées correspond de préférence sensiblement au diamètre du galet d'alignement. Le galet d'alignement est avantageusement solidaire des moyens de guidage et les parois de guidage solidaires de la machine. De préférence, le verrou de liaison, le galet de positionnement en position abaissée et le galet d'alignement sont alignés et sensiblement à une même altitude.

Dans une forme de réalisation de l'invention, les moyens de connexion pour la connexion électrique de la machine à un poste de travail comportent d'une part un premier connecteur disposé sur la machine et d'autre part un second connecteur fixe, destiné à coopérer avec le premier connecteur et disposé sur une paroi verticale du poste de travail. Dans ce cas, le premier connecteur est par exemple mobile sur la machine entre une première position avancée dans laquelle il est connecté avec le second connecteur lorsque les deux connecteurs sont face à face et une seconde position reculée dans laquelle il est éloigné du second connecteur, la direction de déplacement du premier connecteur étant sensiblement horizontale et perpendiculaire au plan de jonction des deux connecteurs.

Une variante de réalisation avantageuse de l'invention prévoit que les moyens de commutation permettant de modifier la source d'alimentation en énergie électrique de la machine lorsque celle-ci est connectée électriquement à la fois à un poste de travail et aux moyens de guidage comportent des moyens de comparaison pour vérifier, avant de réaliser une commutation, que le branchement des phases de courant électrique de la future source d'alimentation correspondent au branchement des phases de courant électrique de l'alimentation actuelle. Les tests réalisés par ces moyens de comparaison doivent permettre d'éviter d'endommager la machine dans le cas où, par exemple, une intervention est faite sur le réseau électrique et que des fils électriques ont été interchangés par inadvertance.

Pour un bon positionnement de la machine par le dispositif selon l'invention, chaque poste de travail est avantageusement équipé de deux butées destinées à coopérer avec des contre-butées disposées sur la machine, et pour garantir que la machine reste immobile, elle comporte de préférence des moyens d'arrimage pour son arrimage sur au moins l'une des butées.

Des détails et avantages de la présente invention ressortiront mieux de la description qui suit, faite en référence au dessin schématique annexé, sur lequel :
La figure 1 représente l'intérieur d'un bâtiment destiné à recevoir un dispositif selon l'invention,
La figure 2 représente le même bâtiment en vue de dessus et équipé d'un pont roulant,
La figure 3 est une vue de côté du pont roulant de la figure 2,
La figure 4 montre un visuel de simulateur de vol,
La figure 5 montre en vue de dessus un tripode destiné à coopérer avec le visuel de la figure 4,
La figure 6 est une vue en perspective de la partie supérieure du tripode de la figure 5,
La figure 7 est une vue en coupe d'un dispositif interface entre le pont roulant des figures 2 et 3 et le tripode des figures 5 et 6, et
La figure 8 est une vue de détail en élévation des moyens de connexion électrique d'un visuel à un poste fixe.

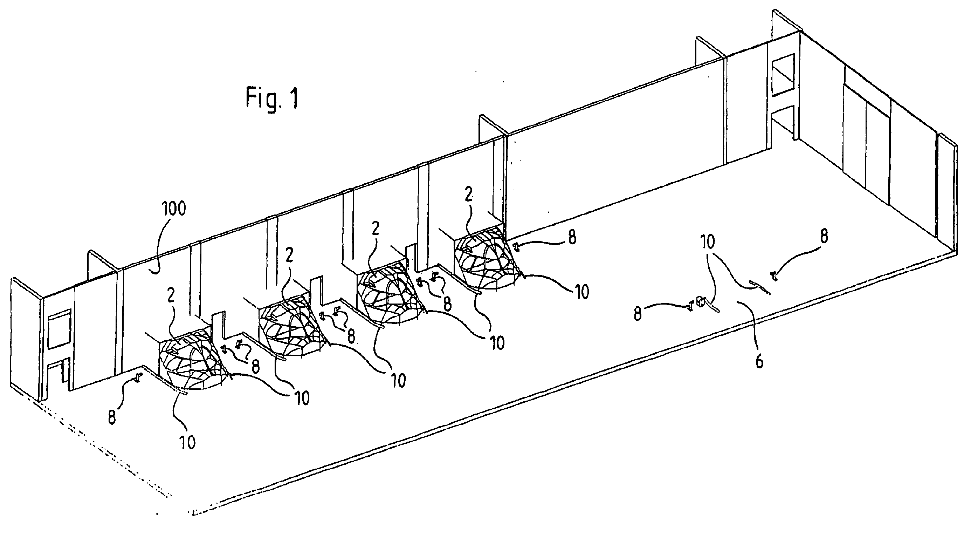

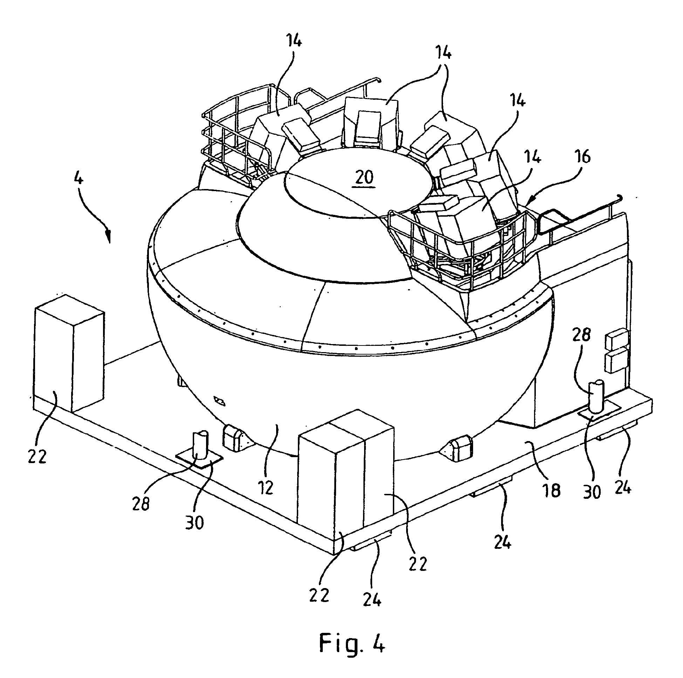

La figure 1 représente l'intérieur d'un bâtiment dans lequel sont disposés quatre cockpits 2 d'avion. Il s'agit pour chacun de ces cockpits 2 d'une partie d'un simulateur de vol. L'autre partie de ces simulateurs de vol est constituée par un système de visualisation de l'environnement extérieur que l'on appelle par la suite visuel 4 et représenté sur la figure 4. Ce visuel 4 est mobile et peut se déplacer pour venir prendre place devant chaque cockpit 2 d'avion. Ainsi on a dans la salle représentée quatre simulateurs de vol se partageant tous un même visuel 4. Il est également prévu dans le bâtiment représenté une aire de maintenance 6 pour le visuel 4.

Le dispositif selon l'invention permet de réaliser le déplacement du visuel 4 dans la salle pour le positionner soit face à un cockpit 2, soit pour l'amener au niveau de son aire de maintenance 6. Le déplacement de ce visuel 4 se fait sur un sol que l'on suppose dans toute la suite de la description comme étant horizontal. On remarque au niveau de chaque cockpit 2 d'avion et sur l'aire de maintenance 6 la présence d'une part de butées 8 et d'autre part de rails de guidage 10. Ces équipements sont destinés à permettre un positionnement exact du visuel 4 par rapport aux cockpits 2 et sur l'aire de maintenance 6. Une manière permettant de réaliser ce positionnement est décrite plus en détails dans la suite de la présente description.

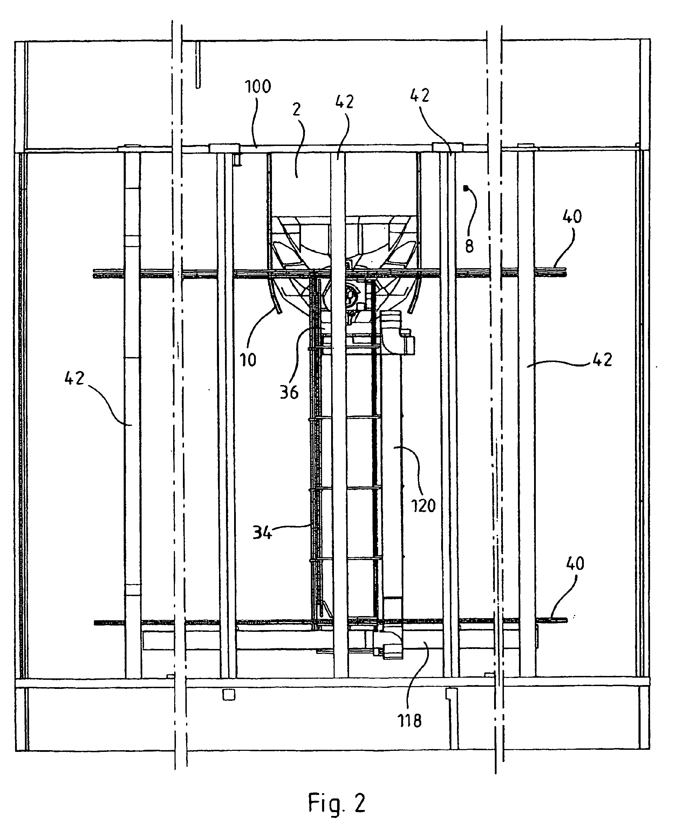

La figure 4 montre en perspective le visuel 4 qui se déplace dans le bâtiment représenté sur les figures 1 et 2. Ce visuel 4 comporte notamment un miroir (non représenté) fixé sur une paroi extérieure 12 et des projecteurs 14 pour projeter une image sur un écran (non représenté). Il se présente comme une salle sensiblement hémicylindrique comportant une ouverture 16 à l'arrière, montée sur une plate-forme 18 et sur le plafond 20 de laquelle sont montés les projecteurs 14. Cette salle vient coiffer un cockpit 2 d'avion de telle sorte qu'une personne assise dans ce cockpit 2 à la place du pilote ou du copilote ne voit à travers les vitres de ce cockpit 2 que le miroir du visuel 4. Ce miroir est orienté vers l'écran du visuel 4 et les projecteurs 14 sont orientés vers cet écran. Ainsi, les personnes assises dans le cockpit 2 voient l'image projetée par les projecteurs 14. Le miroir se présente sous la forme d'une portion de sphère s'étendant sur l'horizontale sur environ 200° et sur une hauteur suffisante, de l'ordre de 1,50 m, pour couvrir tout le champ de vision d'un pilote ou d'un copilote assis à sa place dans le cockpit 2 et regardant à travers les vitres du cockpit 2. Des calculateurs 22 montés sur la plate-forme 18, gèrent les projecteurs 14 et génèrent l'image projetée de manière que celle-ci corresponde aux instructions de pilotage reçues et de telle sorte que l'image vue par le pilote et le copilote reproduise fidèlement ce qu'ils verraient s'ils étaient à bord d'un avion. Un tel visuel 4 est de type connu et n'est pas décrit plus en détails ici.

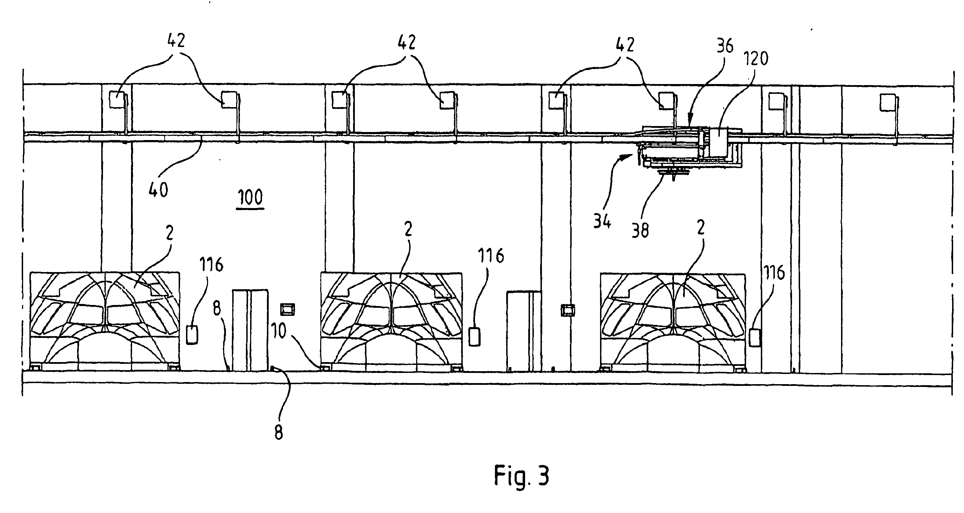

Le visuel 4 de la figure 4, par rapport à un visuel connu de l'art antérieur, est monté sur coussins d'air. Six coussins d'air 24 sont régulièrement répartis sous la plate-forme 18, à proximité de la périphérie de celle-ci. Tous types de coussins d'air peuvent être utilisés ici. Les coussins d'air 24 représentés comportent chacun une plaque venant se fixer sous la plate-forme 18. Une membrane est fixée sur la périphérie de la face inférieure de cette plaque ainsi qu'au centre de celle-ci. On crée ainsi une chambre périphérique sous la plaque. Cette chambre est alimentée en air comprimé. Des trous calibrés réalisés dans la membrane à proximité de la fixation centrale de celle-ci laissent s'échapper de l'air avec un débit connu hors de la chambre. Cet air qui s'échappe sous la plaque, au centre de celle-ci, forme le coussin d'air, limité dans l'espace par la membrane gonflée et le sol, sur lequel vient reposer la plate-forme 18 sans contact avec le sol. Lorsque les six coussins d'air 24 sont alimentés en air comprimé, la plate-forme 18 et tout le visuel 4 sont alors en sustentation au-dessus du sol du bâtiment représenté sur les figures 1 à 3.

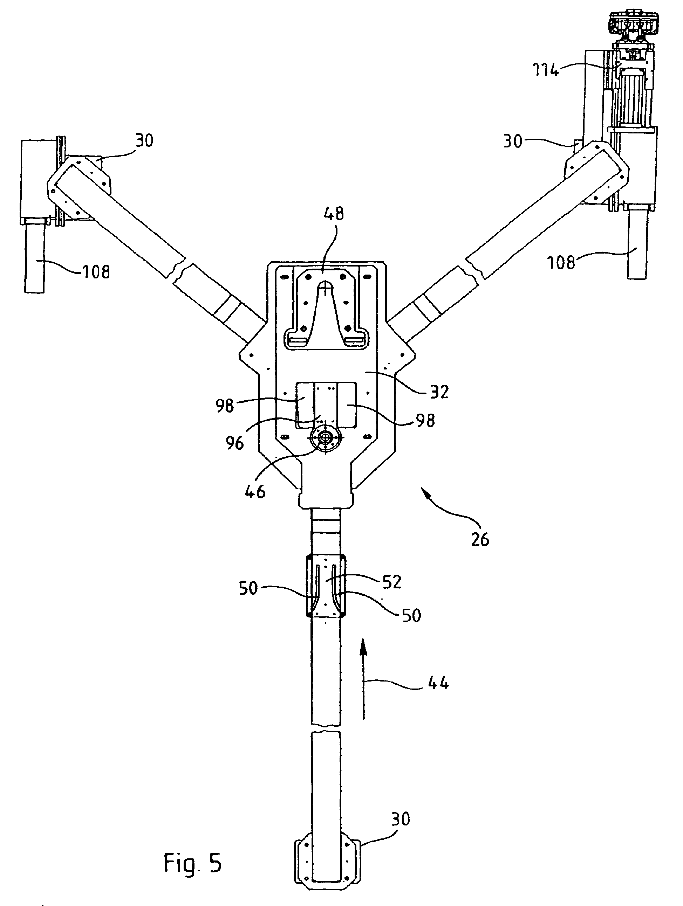

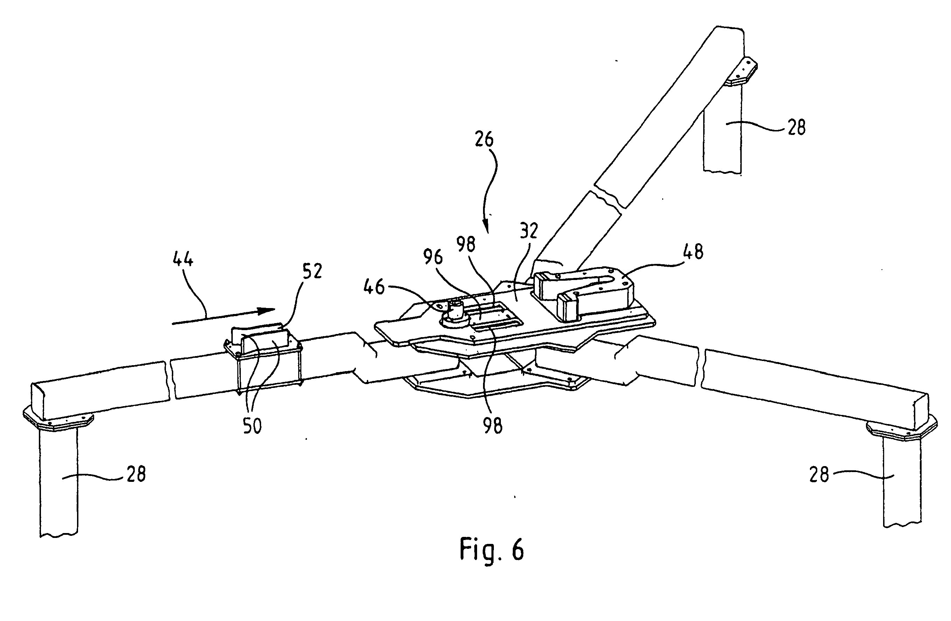

Le visuel 4 est en outre équipé d'un tripode 26 représenté en vue de dessus sur la figure 5 et partiellement en perspective sur la figure 6. Comme son nom l'indique, ce tripode 26 est muni de trois pieds 28. Chacun de ceux-ci est muni d'une semelle 30, se présentant sous la forme d'une plaque métallique, permettant la fixation du tripode 26 sur la face supérieure de la plate-forme 18 du visuel 4. Les trois pieds 28 se rejoignent au-dessus du plafond 20 du visuel 4. Au niveau de la jonction des trois pieds 28 se trouve un premier dispositif interface 32. Le tripode 26 forme au-dessus du visuel 4 un portique. Le premier dispositif interface 32 permet de réaliser la liaison du visuel 4 avec des moyens de guidage et de déplacement décrits ci-après.

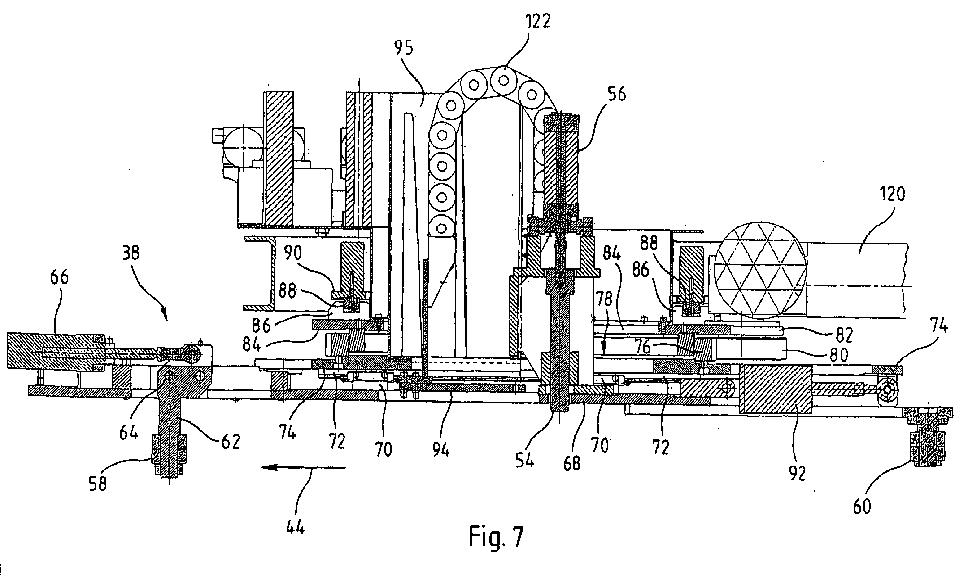

La figure 2 montre en vue de dessus un pont roulant 34 utilisé pour déplacer et guider le visuel 4. La figure 2 est partiellement coupée et on n'a représenté sur cette figure que la zone du bâtiment dans laquelle se trouve le pont roulant 34 et les extrémités du bâtiment. Un chariot 36 mobile équipe le pont roulant 34. Ce chariot se déplace dans un plan horizontal parallèle au sol du bâtiment et disposé à quelques mètres au-dessus de celui-ci. Un second dispositif interface 38 est monté sur le chariot 36 (cf. figure 7). Ce second dispositif interface 38 coopère avec le premier dispositif interface 32 pour réaliser l'accouplement mécanique, mais aussi électrique et pneumatique, entre le chariot 36 et le visuel 4.

Le pont roulant 34 est suspendu à deux rails 40 parallèles s'étendant sensiblement sur toute la longueur du bâtiment. Ces rails 40 sont horizontaux et suspendus à des poutres 42 du bâtiment accueillant le pont roulant 34. Pour que le pont roulant 34 se déplace en restant bien perpendiculaire aux rails 40, il est prévu de munir chaque extrémité du pont roulant 34 d'un système d'entraînement du pont roulant 34 par rapport au rail correspondant. En outre, pour connaître avec précision la position du pont roulant 34 par rapport aux rails 40 (qui sont fixes) et donc par rapport au bâtiment, chaque rail 40 est muni sur toute sa longueur correspondant à la course du pont roulant 34 d'une bande à codes barres. Un système de lecture de codes barres est monté face à cette bande sur chaque extrémité du pont roulant 34. De cette manière on peut à la fois connaître la position exacte du pont roulant 34 et aussi déterminer si le pont roulant 34 est parfaitement perpendiculaire aux rails 40. Un asservissement des dispositifs d'entraînement du pont roulant par les lecteurs de codes barres permet de garantir un déplacement du pont roulant sans distorsion.

Le chariot 36 du pont roulant 34 se déplace sur ce dernier perpendiculairement aux rails 40. Ici aussi, pour une parfaite maîtrise de la position du chariot 36 par rapport au pont roulant, le chariot 36 est équipé d'un lecteur de codes barres tandis qu'une bande de codes barres est fixée sur le pont roulant 34 de manière à se trouver face au lecteur correspondant sur toute la course du chariot 36 sur le pont roulant 34. Le système d'entraînement du chariot 36 sur le pont roulant 34 est un système d'entraînement classique de l'art antérieur, de même pour ce qui concerne l'entraînement du pont roulant 34 par rapport aux rails 40, et n'est donc pas décrit plus en détails ici.

Les premier (32) et second (38) dispositifs interface permettent de réaliser la liaison mécanique, électrique et pneumatique entre le visuel 4 et le chariot 36 du pont roulant 34. La liaison mécanique est réalisée en premier. Une fois le chariot 36 et le visuel 4 solidaires mécaniquement, les branchements électriques et pneumatique sont réalisés.

Les opérations de couplage mécanique et autres sont toujours réalisées lorsque le visuel 4 est face à un cockpit 2 ou bien sur son aire de maintenance 6. Lorsque le système doit gérer plusieurs visuels, il est aussi envisageable de prévoir des places de stationnement pour le(s) visuel(s) non utilisé(s). Ces opérations ont donc toujours lieu en des endroits précis prédéterminés. Le visuel 4 est alors immobile et le pont roulant 34 et son chariot 36 se déplacent pour venir chercher le visuel 4. Le pont roulant 34 vient se positionner tout d'abord à hauteur du visuel 4, puis le chariot 36 se déplace pour venir se placer juste au-dessus du visuel 4 et de son premier dispositif interface 32.

Pour assurer un bon guidage et un bon positionnement des deux dispositifs interface 32 et 38, on prévoit de faire arriver toujours le chariot 36 dans le même sens par rapport au visuel 4. Ce sens est symbolisé par une flèche 44 sur les figures 5 à 7 et est perpendiculaire aux rails 40 du pont roulant 34. Des moyens de guidage et de centrage décrits ci-après permettent alors un exact positionnement des deux dispositifs interface l'un par rapport à l'autre. Une fois ce positionnement réalisé, le couplage mécanique est réalisé, puis les couplages électriques et pneumatique.

Le premier dispositif interface 32 (figures 5 et 6) est disposé sur le tripode 26. Il comprend tout d'abord une douille 46 cylindrique orientée de telle sorte que son axe de révolution soit vertical. Cette douille 46 est disposée également de manière à se trouver sensiblement au-dessus du centre de gravité de l'ensemble mobile comprenant notamment le visuel 4, sa plate-forme 18 et son tripode 26.

Le premier dispositif interface 32 comprend également, sensiblement à la même altitude que la douille 46, des moyens de centrage et d'alignement. Il y a tout d'abord une pièce en forme de V 48. Cette pièce présente un plan de symétrie aligné sur la direction donnée par la flèche 44 et l'ouverture du V est orientée vers la douille 46. De l'autre côté de la douille 46, aligné avec cette douille 46 et la pièce en forme de V 48, se trouve un ensemble d'alignement formé de deux parois d'alignement 50 verticales. Ces deux parois d'alignement 50 délimitent un canal 52 horizontal s'étendant dans la direction indiquée par la flèche 44. L'entrée de ce canal, c'est-à-dire son extrémité éloignée de la douille 46, est évasée de manière à réaliser un guidage vers l'intérieur du canal 52.

Le second dispositif interface 38 (figure 7) comporte des moyens complémentaires à ceux du premier dispositif interface 32 décrit précédemment. Il présente tout d'abord un verrou 54 se présentant sous la forme d'une barre cylindrique circulaire de forme adaptée à l'intérieur de la douille 46. L'axe de ce verrou est disposé verticalement et un vérin 56 est prévu pour déplacer verticalement ce verrou 54 entre une position déverrouillée relevée et une position verrouillée abaissée. Dans sa position verrouillée, l'extrémité inférieure du verrou 54 se trouve dans la douille 46. L'ouverture supérieure de la douille est de préférence évasée pour faciliter l'introduction du verrou 54 dans la douille 46. En outre, les diamètres extérieur du verrou 54 et intérieur de la douille 46 sont adaptés de manière à limiter le jeu entre ces deux pièces tout en autorisant un glissement sans effort entre elles.

Le second dispositif interface 38 comporte également deux galets de guidage et d'alignement. Un premier galet 58 est destiné à coopérer avec la pièce en forme de V 48. Le diamètre de ce premier galet 58 correspond à une forme arrondie prévue au niveau de la pointe du V de la pièce en V 48. Le second galet 60 est destiné à coopérer avec les parois d'alignement 50. Il est aligné avec le verrou 54 et le premier galet 58. Son diamètre correspond sensiblement à la largeur du canal 52 dans sa partie non évasée. Lorsque le premier galet 58 est positionné au fond du V de la pièce en forme de V 48 et que le second galet 60 est positionné à l'intérieur du canal 52 entre les parois d'alignement 50, le verrou 54 se trouve juste au-dessus de la douille 46.

Pour éviter une collision entre le premier galet 58 et la douille 46, ce premier galet 58 est monté à l'extrémité d'un bras 62 monté pivotant autour d'un axe de pivotement horizontal 64, entre une position où le bras 62 est sensiblement vertical et le premier galet 58 dans une position abaissée et une seconde positon où le bras 62 est sensiblement horizontal et le premier galet 58 en position relevée. Un vérin 66 est prévu pour commander le pivotement du bras 62 et l'abaissement (ou le relèvement) du premier galet 58 associé.

Il convient également de pouvoir rattraper des erreurs de positionnement du pont roulant 34 et du chariot 36 lorsque le chariot 36 vient "chercher" le visuel 4. À cet effet le second dispositif interface 38 est muni de tables croisées. Ceci permet d'avoir deux degrés de liberté en translation dans un plan horizontal pour le positionnement du chariot 36 lors des manoeuvres de guidage et d'alignement précédant le couplage à l'aide du verrou 54 et des galets 58 et 60 du visuel 4 avec le chariot 36. Un troisième degré de liberté, en rotation autour d'un axe vertical, pour permettre un alignement parfait entre les premier (32) et second (38) dispositifs interface est aussi prévu.

Le verrou 54 et les galets 58 et 60 sont montés sur une table inférieure 68 horizontale. Le verrou 54 est fixé sur la face supérieure de cette table inférieure mais un passage est prévu dans cette table inférieure 68 pour ce verrou 54 si bien que son extrémité réalisant le verrouillage avec le premier dispositif interface 32 se trouve en-dessous de la table inférieure 68. La face supérieure de la table inférieure 68 porte également des patins de guidage 70 à billes, ou similaires. Ces patins reçoivent des rails de guidage 72 correspondants qui sont montés sur une première table intermédiaire 74. Cette dernière porte sur sa face supérieure une couronne dentée 76. La face intérieure de cette couronne dentée 76 est lisse et est guidée, éventuellement par l'intermédiaire de roulements, sur un anneau de guidage 78. La face extérieure dentée de la couronne dentée 76 engrène avec une roue dentée 80, placée comme elle dans un plan horizontal. Cette roue dentée 80 est entraînée par un moteur 82 et peut commander la rotation de la couronne dentée 76. Le moteur 82 et l'anneau de guidage 78 sont tous deux fixés sur une seconde table intermédiaire 84. Cette dernière porte sur sa face supérieure d'autres patins de guidage 86 coopérant avec d'autres rails de guidage 88, eux-mêmes fixés sur une table supérieure 90. Cette dernière est solidaire du chariot 36 coulissant sur le pont roulant 34. On remarque sur la figure 7 que les rails de guidage 88 sont montés perpendiculairement par rapport aux rails de guidage 72. Cette disposition perpendiculaire permet d'avoir des tables croisées.

Lorsque le chariot 36 entraîne le visuel 4, en dehors de la zone délimitée par les rails de guidage au sol, il convient de bloquer les trois degrés de liberté laissés par le second dispositif interface 38. À cet effet, des moyens de blocage sont mis en oeuvre. Le moteur 82 peut bloquer une libre rotation de la couronne dentée 76 autour de l'anneau de guidage 78. En ce qui concerne les degrés de liberté en translation, des vérins sont mis en oeuvre. Un premier vérin de blocage 92 est monté entre la table inférieure 68 et la première table intermédiaire 74 pour empêcher toute translation involontaire entre ces deux tables. Un second vérin de blocage non visible sur la figure 7 permet, de la même manière que le premier vérin de blocage 92, de bloquer toute translation entre la table supérieure 90 et la seconde table intermédiaire 84.

Lorsque le couplage mécanique est réalisé entre le chariot 36 et le visuel 4, les connexions électriques et pneumatique peuvent se faire. Une platine 94 portant toutes les prises électriques et une prise pneumatique est montée sur la table inférieure 68 du second dispositif interface 38. Cette platine 94 qui se trouve dans un plan horizontal est mobile verticalement grâce à un vérin de connexion 95 permettant son déplacement entre une position inférieure connectée et une position supérieure déconnectée.

Le premier dispositif interface 32 comporte une contre-platine portant les fiches électriques et pneumatique correspondant aux prises de la platine 94. Cette contre-platine du premier dispositif interface 32 n'est pas représentée au dessin. On aperçoit toutefois sur les figures 5 et 6 le logement 96 dans lequel prend place cette contre-platine et les fiches qu'elle porte. Des surfaces de fixation 98 pour cette contre-platine sont prévues et représentées au dessin.

Le visuel 4, lorsqu'il se trouve face à un cockpit 2, est arrimé au sol du bâtiment et est relié électriquement pour son alimentation en énergie électrique mais aussi pour échanger des signaux et des informations avec le cockpit 2. À cet effet, il est donc ici aussi prévu d'avoir des moyens de liaison mécanique et des moyens de liaison électrique. Il est inutile d'avoir une liaison pneumatique dans cette position de repos puisque les coussins d'air 24 ne servent que lors des déplacements du visuel 4.

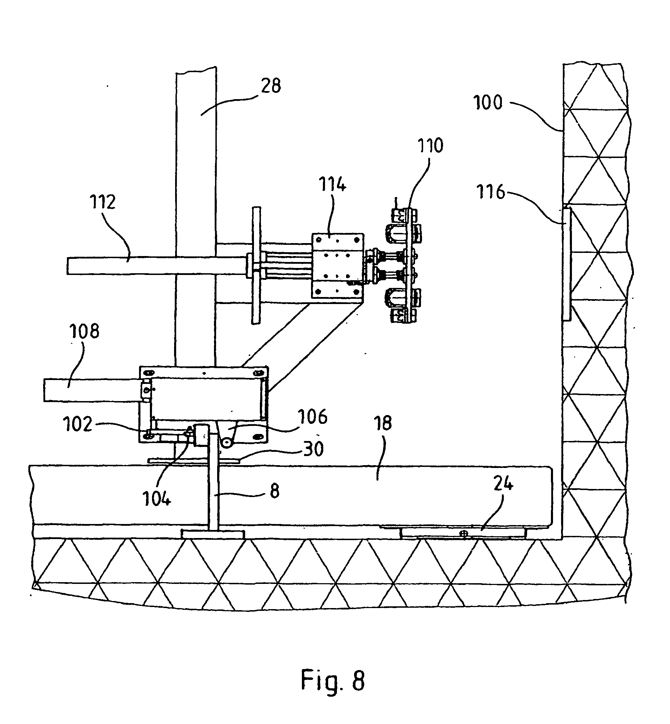

La figure 8 illustre l'arrimage d'un visuel 4 face à un cockpit 2. On reconnaît sur cette figure la plate-forme 18 du visuel 4, un coussin d'air 24 et un pied 28 du tripode 26. Les éléments montés sur ce pied 28 et représentés en élévation sur cette figure 8 sont représentés en vue de dessus sur la figure 5. Ces éléments comportent d'une part des moyens pour l'arrimage mécanique du visuel 4 sur les butées 8 et d'autre part des moyens pour réaliser la connexion électrique du visuel 4.

Lorsque le visuel 4 est conduit par le chariot 36 vers le cockpit 2 devant lequel il doit prendre place, la plate-forme 18 est guidée à la fin de sa course par les rails de guidage 10 jusqu'à sa position finale où le visuel 4 est opérationnel devant le cockpit 2. La fin de course du visuel 4 est sensiblement perpendiculaire à la paroi 100 du bâtiment sur laquelle se trouve le cockpit 2. Au cours de cette phase finale d'approche, lorsque la plate-forme 18 est guidée par les rails de guidage 10 au sol, les trois degrés de liberté prévus au niveau du second dispositif interface 38 sont rendus à nouveau disponibles par déblocage notamment des vérins et moteur correspondants. En fin de course, le visuel 4 vient buter contre les butées 8 fixées sur le sol du bâtiment. Un doigt 102 horizontal à l'extrémité libre duquel est monté un capteur de fin de course 104 vient contre la butée 8. Cette butée 8 peut être un arrêtoir plan. Toutefois, pour réaliser un parfait centrage du visuel 4 face au cockpit 2, on peut prévoir sur la butée 8 deux surfaces convergentes, par exemple en forme de dièdre, la ligne de jonction des deux plans convergents étant une droite verticale. De cette manière, le doigt 102 vient se centrer sur cette ligne verticale. De préférence, une butée 8 est prévue de chaque côté d'un cockpit 2 mais seule l'une de ces butées permet de réaliser le centrage du visuel 4 par rapport au cockpit 2.

Une fois que les deux doigts 102 du visuel sont contre les butées 8 correspondantes, le visuel 4 vient s'arrimer sur ces butées. La figure 8 représente le visuel 4 en position arrimée. Dans cette position, la butée 8 est en sandwich entre un bras d'arrimage 106 et le doigt 102. Lors du déplacement du visuel 4, le bras d'arrimage 106 est en position relevée sensiblement horizontale pour ne pas venir buter contre la butée 8. Une fois le visuel 4 bien positionné devant le cockpit 2, un vérin d'arrimage 108 agit sur le bras pour le faire pivoter de telle sorte qu'il vienne prendre la butée 8 en sandwich avec le doigt 102. La cinématique du déplacement du bras d'arrimage 106 correspond sensiblement à celle du mouvement du bras pivotant 62.

La connexion électrique du visuel 4 au cockpit 2 est également illustrée sur la figure 8. Une prise mobile 110 disposée dans un plan vertical est montée sur un pied 28 du tripode 26 de manière à se trouver face à la paroi 100 lorsque le visuel 4 est en place face à un cockpit 2. Cette prise mobile 110 est entraînée par un vérin d'avancement 112. Le tout est monté sur un support 114 qui assure également le guidage de la prise 110 au cours de son déplacement entre une position rétractée déconnectée et une position avancée où elle est connectée avec une prise murale 116. La prise mobile 110 possède des degrés de liberté par rapport au support 114 de façon à permettre son centrage sur la prise murale 116 et son accouplement avec celle-ci.

Le dispositif décrit ci-dessus permet ainsi le déplacement du visuel 4 d'un cockpit 2 à l'autre, ou éventuellement vers l'aire de maintenance 6. Un dispositif de gestion et de commande de ce dispositif de déplacement est prévu pour synchroniser les diverses opérations et mouvements. Ce dispositif de gestion et de commande peut être disposé par exemple dans une salle avec vue sur l'espace dans lequel se déplace le visuel 4. Lorsque ce visuel 4 est en place, par exemple face à un cockpit 2, le pont roulant 34 se déplace pour venir à la hauteur du visuel 4. Les positions où peut se trouver le visuel 4 sont toutes mémorisées et le pont roulant 34 vient se positionner grâce à son système de lecture de codes barres. Le visuel 4 est alimenté électriquement par la prise murale 116 associée au cockpit 2 devant lequel il se trouve, la prise 110 se trouvant dans sa position connectée.

Le chariot 36 est prépositionné sur le pont roulant 34 pour se trouver du bon côté du visuel 4 et de son premier dispositif interface 32. Ce chariot 36 est alimenté d'une part en énergie électrique et d'autre part en énergie pneumatique. L'alimentation en électricité du pont roulant se fait grâce à des conducteurs disposés le long des rails 40 et à des frotteurs (non représentés). De même le pont roulant 34 est muni de conducteurs disposés sur toute sa longueur et le chariot 36 est lui aussi équipé de frotteurs (non représentés). L'alimentation en air comprimé est quant à elle réalisée tout le long d'un rail 40 par une première ligne de distribution 118 pour alimenter tout d'abord le pont roulant 34 et par une seconde ligne de distribution 120 disposée le long du pont roulant 34 pour alimenter le chariot 36. Sur le chariot 36 lui même, la seconde ligne de distribution 120 arrive sur le second dispositif interface 38 et est relié à la platine 94 de connexion par l'intermédiaire d'une chaîne de transport 122 (figure 7).

Le chariot 36 s'approche alors du visuel 4 dans le sens indiqué par la flèche 44 sur les figures 5 à 7. Lors de cette approche, le premier galet 58 est en position relevée. Il ne s'abaisse qu'après avoir dépassé la douille 46 du premier dispositif interface 32 associé au tripode 26 fixé sur le visuel 4. Le chariot 36 s'avance alors dans le sens indiqué par la flèche 44 jusqu'à ce que le premier galet 58 arrive au fond du V de la pièce en forme de V 48. Lors de cette opération, les vérins de blocage 92 sont mis à l'air libre et le moteur 82 n'est pas alimenté de telle sorte que la table inférieure 68 du second dispositif interface 38 ait trois degrés de liberté, deux en translation dans un plan horizontal et un autre en rotation autour d'un axe vertical.

Lorsque le premier galet 58 pénètre dans la pièce en forme de V, le second galet 60 vient coulisser entre les parois d'alignement 50. Ceci permet un parfait positionnement de la table inférieure 68 du second dispositif interface 38 par rapport au premier dispositif interface 32. Quand le premier galet 58 vient en butée dans la pièce en forme de V 48, on est assuré que le verrou 54 se trouve face à la douille 46. Le vérin 56 est actionné pour faire rentrer l'extrémité du verrou 54 dans la douille 46 et assurer ainsi le couplage mécanique du chariot 36 du pont roulant 34 avec le visuel 4. Une fois ce couplage réalisé, les vérins de blocage 92 sont alimentés en air comprimé pour empêcher tout mouvement de translation de la table inférieure 68.

La connexion électrique et pneumatique entre le chariot 36 et le visuel 4 est réalisée après le couplage mécanique en agissant sur le vérin de connexion 95. La platine 94 et les connexions qu'elle porte se déplacent alors vers la contre-platine correspondante et la connexion est réalisée. Le visuel 4 est alors relié électriquement d'une part par la prise murale 116 associée au cockpit 2 et d'autre part par le chariot 36. Le visuel 4 est aussi alimenté pneumatiquement mais uniquement par le chariot 36.

Pendant que le visuel 4 est relié électriquement à la prise murale 116 et au chariot 36, un test est réalisé pour contrôler le bon branchement du côté du chariot 36 des prises de puissance. Ce test a pour but de vérifier que les phases de courant du nouveau branchement correspondent bien à la disposition attendue et prévue initialement. On veut ici éviter le cas où une intervention a été réalisée sur le réseau d'alimentation en énergie électrique et où les phases de courant ont été involontairement changées par interversion de deux fils d'alimentation. Ce test permet d'éviter de réaliser des dommages sur les équipements électriques embarqués sur la plate-forme 18 et associés au visuel 4.

Si le test se révèle concluant, des moyens de commutation (non représentés) font basculer l'alimentation en énergie électrique du visuel 4 de la prise murale 116 vers le chariot 36. En cas de test négatif, le dispositif de déplacement est arrêté et l'anomalie est signalée sur un écran de contrôle du dispositif de gestion et de commande.

Une fois la commutation réalisée, la prise 110 est retirée de la prise murale 116 par actionnement du vérin d'avancement 112. Le visuel 4 est ensuite libéré de ses butées 8 en agissant sur les vérins d'arrimage 108 pour relever les bras d'arrimage 106 correspondants. La plate-forme 18 et le visuel 4 peuvent alors être mis en sustentation. L'alimentation en air comprimé des coussins d'air à partir du chariot 36 est commandée. L'ensemble se soulève de quelques millimètres. Les deux dispositifs interface (32 et 38) sont prévus avec un jeu suffisant pour pouvoir absorber ces quelques millimètres et par la suite, lors du déplacement du visuel 4, de faibles variations d'altitude de ce visuel 4.

Le chariot 36 et le pont roulant 34 se déplacent pour emmener le visuel 4 à destination. Les mouvements du chariot 36 par rapport au pont roulant 34 et les déplacements du pont roulant 34 par rapport aux rails 40 permettent de déplacer le visuel 4 dans tout le bâtiment. Grâce à la couronne dentée 76 et au moteur 82, il est également possible de faire tourner le visuel 4 d'un angle quelconque. Dans le cas de figure représenté au dessin, lorsque le visuel 4 se déplace d'un cockpit 2 vers l'aire de maintenance 6, ou inversement, un pivotement de 180° est réalisé.

Lors de son arrivée devant un autre cockpit 2 ou sur l'aire de maintenance 6, le visuel 4 est guidé en fin de course par les rails de guidage 10 se trouvant au sol. En effet, malgré la sustentation du visuel 4 réalisée grâce aux coussins d'air, le visuel 4 à cause de sa masse importante et des frottements -certes faibles mais existants- sur le sol n'est pas toujours parfaitement aligné avec le chariot 36 lors de son déplacement. Les rails de guidage 10 permettent alors de bien repositionner le visuel 4 à partir du sol du bâtiment.

En fin de course, le visuel 4 vient en butée contre les butées 8 prévues à cet effet. Un centrage peut être alors réalisé comme indiqué plus haut en prévoyant un guidage sur une des butées 8. Les butées 8 sont détectées grâce aux capteurs fin de course 104. Le visuel 4 est alors arrivé à destination. Pour éviter tout déplacement dans un plan horizontal, un arrimage est réalisé en actionnant les vérins d'arrimage 108. L'alimentation en air comprimé des coussins d'air 24 est coupée et le visuel 4 se pose sur le sol. Compte tenu de la masse de l'ensemble, cet arrimage est facultatif.

Le vérin d'avancement 112 est actionné pour venir avancer la prise 110 vers la prise murale 116 face à laquelle il se trouve jusqu'à réaliser la connexion des deux prises (110 et 116). À cet instant, le visuel 4 est à nouveau connecté d'une part à une prise murale 116 et d'autre part au chariot 36. Le test de bon branchement des phases sur la prise murale 116 est alors réalisé comme précédemment le bon branchement a été testé au niveau de la connexion au chariot 36. Si les branchements sont bons, l'alimentation du visuel est commutée.

Diverses options sont ici envisageables. On peut souhaiter déconnecter le chariot 36 du visuel 4 pour être sûr de ne pas avoir d'interférences ou tout simplement pour déplacer le chariot 36 et son pont roulant 34. Dans ce cas, la déconnexion est réalisée en réalisant les opérations de connexion dans le sens et dans l'ordre inverses. Dans le cas où un seul visuel 4 est associé au pont roulant 34, le chariot 36 reste de préférence au niveau du visuel 4 si aucune opération de maintenance n'est prévue. Ainsi le chariot 36 est prêt à déplacer à nouveau le visuel 4, sans délais, dès que l'ordre de déplacement est reçu. Dans le cas par contre où plusieurs visuels 4 sont associés à un pont roulant 34, le chariot 36 revient alors de préférence dans une position de repos prédéfinie pour être à disposition des visuels dès qu'un déplacement est souhaité.

Le dispositif de déplacement décrit ci-dessus permet le déplacement d'une masse très importante (le visuel décrit et représenté au dessin pèse plusieurs tonnes) sans emprise au sol. Seuls quelques rails de guidage sont présents à proximité des endroits où la masse doit accoster. Il faut remarquer que ces rails de guidage sont optionnels, notamment si au moins une butée est munie de moyens de centrage. La forme de réalisation décrite est avantageuse car elle permet un déplacement avec grande précision. De plus la solution adoptée évite d'avoir des câbles électriques qui se déplacent avec le pont roulant et le chariot de celui-ci. Ce dispositif est d'une grande souplesse d'utilisation. Il permet dans l'application décrite de n'avoir qu'un seul visuel pour plusieurs cockpits. Il est toutefois également possible avec le dispositif décrit de gérer plusieurs visuels. Il s'agit alors soit de visuels identiques soit de visuels distincts (de par leur taille ou leur fonctionnalités).

La présente invention ne se limite pas à la forme de réalisation décrite ci-dessus à titre d'exemple non limitatif. Elle concerne également toutes les variantes de réalisation définies dans les revendications ci-après.

Ainsi par exemple, les moyens de sustentation ne sont pas forcément des coussins d'air. On peut envisager d'avoir une sustentation magnétique.

Le fait de prévoir des moyens de guidage aériens permet de libérer le sol du bâtiment pour en faciliter l'accès et ne pas gêner une éventuelle circulation. Il est toutefois envisageable d'avoir un véhicule tracteur qui vient tirer et/ou pousser la charge pour la déplacer d'un endroit à un autre.

Le dispositif selon l'invention peut avoir d'autres applications que celle décrite ci-dessus avec un visuel de simulateur de vol.

D'autres dispositifs de connexion et de couplage mécanique peuvent être conçus pour un dispositif de déplacement selon la présente invention. Les formes de réalisation décrites sont des formes de réalisation préférées données à titres d'exemples non limitatifs.

## Revendications

1. Dispositif pour le déplacement d'une machine (4) ou similaire entre plusieurs postes de travail (2), comportant:
- des moyens de guidage (34, 36),
- des moyens d'alimentation des moyens de guidage (34,36) en énergie électrique,
- des moyens de liaison mécanique (46, 54) entre la machine (4) et les moyens de guidage,
- des moyens de connexion (110, 112 116) pour la connexion électrique de la machine (4) à chaque poste de travail (2),
**caractérisé en ce qu'**il comporte en outre :
- des moyens (24) permettant de mettre la machine (4) en sustentation,
- des moyens de connexion (94, 95) pour la connexion électrique de la machine (4) aux moyens de guidage (34, 36),
- des moyens de commutation permettant de modifier la source d'alimentation en énergie électrique de la machine (4) lorsque celle-ci est connectée à la fois à un poste de travail (2) et aux moyens de guidage (34, 36), et
- des moyens de gestion et de commande pour le déplacement de la machine (4) et l'alimentation en énergie électrique de celle-ci.

2. Dispositif pour le déplacement d'une machine (4) ou similaire selon la revendication 1, **caractérisé en ce que** les moyens de sustentation comportent des coussins d'air (24).

3. Dispositif pour le déplacement d'une machine (4) ou similaire selon la revendication 2, **caractérisé en ce que** les coussins d'air (24) sont alimentés en air comprimé par l'intermédiaire des moyens de guidage (34, 36).

4. Dispositif pour le déplacement d'une machine (4) ou similaire selon l'une des revendications 1 à 3, **caractérisé en ce que** les moyens de guidage sont des moyens de guidage aériens et comportent un chariot (36) monté sur un pont roulant (34).

5. Dispositif pour le déplacement d'une machine (4) ou similaire selon la revendication 4, **caractérisé en ce que** le pont roulant (34) est muni de repères régulièrement disposés sur celui-ci et **en ce que** le chariot (36) comporte un lecteur coopérant avec les repères pour lire la position du chariot sur le pont roulant (34).

6. Dispositif pour le déplacement d'une machine (4) ou similaire selon l'une des revendications 4 ou 5, **caractérisé en ce que** le pont roulant (34) est monté coulissant sur deux rails (40) sensiblement parallèles, **en ce que** chaque rail (40) est muni de repères régulièrement disposés sur celui-ci et **en ce que** le pont roulant (34) comporte un lecteur face à chaque rail, chaque lecteur coopérant avec les repères correspondant pour lire la position du pont roulant (34) par rapport au rail (40) correspondant.

7. Dispositif pour le déplacement d'une machine (4) ou similaire selon l'une des revendications 5 ou 6, **caractérisé en ce que** les repères utilisés sont des codes barres.

8. Dispositif pour le déplacement d'une machine (4) ou similaire selon l'une des revendications 4 à 7, **caractérisé en ce que** le pont roulant (34) est alimenté en énergie électrique par un système comportant d'une part un conducteur sous tension s'étendant longitudinalement par rapport au déplacement du pont roulant (34) et d'autre part un frotteur solidaire du pont roulant (34) et en contact permanent avec le conducteur sous tension.

9. Dispositif pour le déplacement d'une machine (4) ou similaire selon l'une des revendications 4 à 8, **caractérisé en ce que** les moyens de connexion pour la connexion électrique de la machine aux moyens de guidage aériens comportent d'une part un premier connecteur disposé sur la machine et d'autre part un second connecteur destiné à coopérer avec le premier connecteur et disposé sur le chariot (36) monté sur le pont roulant (34), **en ce que** le premier connecteur est fixe sur la machine (4), et **en ce que** le second connecteur est mobile sur le chariot (36) entre une première position dans laquelle il est connecté avec le premier connecteur lorsque les deux connecteurs sont face à face et une seconde position dans laquelle il est éloigné du premier connecteur, la direction de déplacement du second connecteur étant sensiblement perpendiculaire au plan de jonction des deux connecteurs.

10. Dispositif pour le déplacement d'une machine (4) ou similaire selon l'une des revendications 1 à 9, **caractérisé en ce que** les moyens de liaison mécanique comportent d'une part un verrou (54) de liaison vertical et d'autre part un logement (46) de forme correspondant à celle du verrou (54) de liaison pour recevoir celui-ci, **en ce que** le verrou (54) de liaison vertical est disposé sur les moyens de guidage (36) et le logement (46) sur la machine (4), ou inversement, et **en ce que** des moyens (56) sont prévus pour réaliser un déplacement relatif du verrou (54) de liaison par rapport à son logement (46), dans une direction verticale, permettant ainsi au verrou (54) de liaison de rentrer ou sortir de son logement (46) lorsque le verrou (54) de liaison est aligné verticalement avec son logement (46).

11. Dispositif pour le déplacement d'une machine (4) ou similaire selon la revendication 10, **caractérisé en ce que** les moyens de liaison mécanique comportent en outre des moyens de positionnement présentant d'une part un galet de positionnement (58) et d'autre part un logement en forme de V (48) destiné à recevoir le galet de positionnement (58), et **en ce que** le galet de positionnement (58) est solidaire des moyens de guidage et le logement en V (48) est solidaire de la machine (4), ou inversement.

12. Dispositif pour le déplacement d'une machine (4) ou similaire selon la revendication 11, **caractérisé en ce que** le galet de positionnement (58) est mobile entre une position relevée et une position abaissée dans laquelle il peut coopérer avec le logement en forme de V (48) pour réaliser le positionnement de la machine (4) par rapport aux moyens de guidage (34, 36).

13. Dispositif pour le déplacement d'une machine (4) ou similaire selon l'une des revendications 11 ou 12, **caractérisé en ce que** les moyens de liaison mécanique comportent en outre des moyens d'alignement comportant d'une part des parois de guidage (50) convergentes et d'autre part un galet d'alignement (60) destiné à se déplacer entre lesdites parois de guidage (50), **en ce que** la distance minimale entre les parois de guidage (50) correspond sensiblement au diamètre du galet d'alignement (60), **en ce que** le galet d'alignement (60) est solidaire des moyens de guidage (34, 36) et les parois de guidage (50) solidaires de la machine (4), et **en ce que** le verrou de liaison (54), le galet de positionnement (58) en position abaissée et le galet d'alignement (60) sont alignés et sensiblement à une même altitude.

14. Dispositif pour le déplacement d'une machine (4) ou similaire selon l'une des revendications 1 à 13, **caractérisé en ce que** les moyens de connexion pour la connexion électrique de la machine (4) à un poste de travail (2) comportent d'une part un premier connecteur (110) disposé sur la machine (4) et d'autre part un second connecteur (116) fixe, destiné à coopérer avec le premier connecteur (110) et disposé sur une paroi verticale (100) du poste de travail (2), et **en ce que** le premier connecteur (110) est mobile sur la machine (4) entre une première position avancée dans laquelle il est connecté avec le second connecteur (116) lorsque les deux connecteurs sont face à face et une seconde position reculée dans laquelle il est éloigné du second connecteur (116), la direction de déplacement du premier connecteur (110) étant sensiblement horizontale et perpendiculaire au plan de jonction des deux connecteurs (110, 116).

15. Dispositif pour le déplacement d'une machine (4) ou similaire selon l'une des revendications 1 à 14, **caractérisé en ce que** les moyens de commutation permettant de modifier la source d'alimentation en énergie électrique de la machine (4) lorsque celle-ci est connectée électriquement à la fois à un poste de travail (2) et aux moyens de guidage (34, 36) comportent des moyens de comparaison pour vérifier, avant de réaliser une commutation, que le branchement des phases de courant électrique de la future source d'alimentation correspondent au branchement des phases de courant électrique de l'alimentation actuelle.

16. Dispositif pour le déplacement d'une machine (4) ou similaire selon l'une des revendications 1 à 15, **caractérisé en ce que** chaque poste de travail (2) est équipé de deux butées (8) destinées à coopérer avec des contre-butées (102) disposées sur la machine (4), et **en ce que** la machine comporte des moyens d'arrimage (106) pour son arrimage sur au moins l'une des butées (8).

## Patentansprüche

1. Vorrichtung für das Umsetzen einer Maschine (4) oder dergleichen zwischen mehreren Arbeitsplätzen (2), mit:
- Führungsmitteln (34, 36),
- Mitteln zur Versorgung der Führungsmittel (34, 36) mit elektrischer Energie,
- Mitteln (46, 54) zur mechanischen Verbindung zwischen der Maschine (4) und den Führungsmitteln,
- Anschlussmitteln (110, 112, 116) für den elektrischen Anschluss der Maschine (4) an jeden Arbeitsplatz (2),
**dadurch gekennzeichnet, dass** sie ferner folgendes aufweist:
- Mittel (24), die es ermöglichen, dass die Maschine (4) schwebt,
- Anschlussmittel (94, 95) für den elektrischen Anschluss der Maschine (4) an die Führungsmittel (34, 36),
- Umschaltmittel, die es ermöglichen, die Quelle zur Versorgung der Maschine (4) mit elektrischer Energie zu ändern, wenn diese sowohl an einen Arbeitsplatz (2) als auch an die Führungsmitteln (34, 36) angeschlossen ist, und
- Verwaltungs- und Steuerungsmittel für das Umsetzen der Maschine (4) und die Versorgung dieser Maschine mit elektrischer Energie.

2. Vorrichtung für das Umsetzen einer Maschine (4) oder dergleichen nach Anspruch 1, **dadurch gekennzeichnet, dass** die Schwebemittel Luftkissen (24) aufweisen.

3. Vorrichtung für das Umsetzen einer Maschine (4) oder dergleichen nach Anspruch 2, **dadurch gekennzeichnet, dass** die Luftkissen (24) über die Führungsmittel (34, 36) mit Druckluft versorgt sind.

4. Vorrichtung für das Umsetzen einer Maschine (4) oder dergleichen nach einem der Ansprüche 1 bis 3, **dadurch gekennzeichnet, dass** die Führungsmittel oberirdische Führungsmittel sind und einen Schlitten (36) aufweisen, der an einer Rollbrücke (34) angebracht ist.

5. Vorrichtung für das Umsetzen einer Maschine (4) oder dergleichen nach Anspruch 4, **dadurch gekennzeichnet, dass** die Rollbrücke (34) mit gleichmäßig auf dieser angeordneten Markierungen versehen ist und der Schlitten (36) ein Lesegerät aufweist, das mit den Markierungen zusammenwirkt, um die Position des Schlittens an der Rollbrücke (34) abzulesen.

6. Vorrichtung für das Umsetzen einer Maschine (4) oder dergleichen nach Anspruch 4 oder 5, **dadurch gekennzeichnet, dass** die Rollbrücke (34) auf zwei Schienen (40) gleitend angebracht ist, welche im Wesentlichen parallel sind, dass jede Schiene (40) mit gleichmäßig auf dieser angeordneten Markierungen versehen ist und dass die Rollbrücke (34) gegenüber jeder Schiene ein Lesegerät aufweist, wobei jedes Lesegerät mit den entsprechenden Markierungen zusammenwirkt, um die Position der Rollbrücke (34) in Bezug auf die entsprechende Schiene (40) abzulesen.

7. Vorrichtung für das Umsetzen einer Maschine (4) oder dergleichen nach Anspruch 5 oder 6, **dadurch gekennzeichnet, dass** die verwendeten Markierungen Strichcodes sind.

8. Vorrichtung für das Umsetzen einer Maschine (4) oder dergleichen nach einem der Ansprüche 4 bis 7, **dadurch gekennzeichnet, dass** die Rollbrücke (34) durch ein System mit elektrischer Energie versorgt ist, welches einerseits ein unter Spannung stehendes Leitmittel aufweist, das sich in Bezug auf die Verlagerung der Rollbrücke (34) längs erstreckt, und andererseits einen Schleifkontakt, der fest mit der Rollbrücke (34) verbunden ist und mit dem unter Spannung stehenden Leitmittel permanent in Kontakt ist.

9. Vorrichtung für das Umsetzen einer Maschine (4) oder dergleichen nach einem der Ansprüche 4 bis 8, **dadurch gekennzeichnet, dass** die Anschlussmittel für den elektrischen Anschluss der Maschine an die oberirdischen Führungsmittel einerseits einen ersten, an der Maschine angeordneten Steckverbinder und andererseits einen zweiten Steckverbinder aufweisen, der mit dem ersten Steckverbinder zusammenwirken soll und auf dem an der Rollbrücke (34) angebrachten Schlitten (36) angeordnet ist, dass der erste Steckverbinder fest an der Maschine (4) angeordnet ist und dass der zweite Steckverbinder auf dem Schlitten (36) zwischen einer ersten Position, in der er an den ersten Steckverbinder angeschlossen ist, wenn die beiden Steckverbinder einander gegenüberliegen, und einer zweiten Position beweglich ist, in der er von dem ersten Steckverbinder beabstandet ist, wobei die Verlagerungsrichtung des zweiten Steckverbinders im Wesentlichen senkrecht zur Ebene der Verbindungsstelle der beiden Steckverbinder verläuft.

10. Vorrichtung für das Umsetzen einer Maschine (4) oder dergleichen nach einem der Ansprüche 1 bis 9, **dadurch gekennzeichnet, dass** die Mittel zur mechanischen Verbindung einerseits einen Riegel (54) zur vertikalen Verbindung und andererseits eine Aufnahme (46) aufweisen, deren Form der des Verbindungsriegels (54) entspricht, um diesen aufzunehmen, dass der Riegel (54) zur vertikalen Verbindung auf den Führungsmitteln (36) angeordnet und die Aufnahme (46) an der Maschine (4) ausgebildet ist, oder umgekehrt, und dass Mittel (56) vorgesehen sind, um eine relative Verlagerung des Verbindungsriegels (54) in Bezug auf seine Aufnahme (46) in vertikaler Richtung zu realisieren, wobei somit der Verbindungsriegel (54) in seine Aufnahme (46) eindringen oder aus dieser austreten kann, wenn der Verbindungsriegel (54) vertikal auf seine Aufnahme (46) ausgerichtet ist.

11. Vorrichtung für das Umsetzen einer Maschine (4) oder dergleichen nach Anspruch 10, **dadurch gekennzeichnet, dass** die Mittel zur mechanischen Verbindung ferner Positioniermittel aufweisen, die einerseits eine Positionierrolle (58) und andererseits eine V-förmige Aufnahme (48) aufweisen, die die Positionierrolle (58) aufnehmen soll, und dass die Positionierrolle (58) fest mit den Führungsmitteln verbunden ist und die V-förmige Aufnahme (48) fest mit der Maschine (4) verbunden ist, oder umgekehrt.

12. Vorrichtung für das Umsetzen einer Maschine (4) oder dergleichen nach Anspruch 11, **dadurch gekennzeichnet, dass** die Positionierrolle (58) zwischen einer gehobenen Position und einer abgesenkten Position beweglich ist, in welcher sie mit der V-förmigen Aufnahme (48) zusammenwirken kann, um die Positionierung der Maschine (4) in Bezug auf die Führungsmittel (34, 36) zu realisieren.

13. Vorrichtung für das Umsetzen einer Maschine (4) oder dergleichen nach Anspruch 11 oder 12, **dadurch gekennzeichnet, dass** die Mittel zur mechanischen Verbindung ferner Ausrichtungsmittel aufweisen, die einerseits konvergierende Führungswände (50) und andererseits eine Ausrichtungsrolle (60) aufweisen, welche sich zwischen den Führungswänden (50) verlagern soll, dass der Minimalabstand zwischen den Führungswänden (50) im Wesentlichen dem Durchmesser der Ausrichtungsrolle (60) entspricht, dass die Ausrichtungsrolle (60) fest mit den Führungsmitteln (34, 36) verbunden ist und die Führungswände (50) fest mit der Maschine (4) verbunden sind und dass der Verbindungsriegel (54), die Positionierrolle (58) in der abgesenkten Position und die Ausrichtungsrolle (60) aneinandergereiht sind und sich im Wesentlichen auf gleicher Höhe befinden.

14. Vorrichtung für das Umsetzen einer Maschine (4) oder dergleichen nach einem der Ansprüche 1 bis 13, **dadurch gekennzeichnet, dass** die Anschlussmittel für den elektrischen Anschluss der Maschine (4) an einen Arbeitsplatz (2) einerseits einen ersten, an der Maschine (4) angeordneten Steckverbinder (110) und andererseits einen zweiten, festen Steckverbinder (116) aufweisen, der mit dem ersten Steckverbinder (110) zusammenwirken soll und auf einer vertikalen Wand (100) des Arbeitsplatzes (2) angeordnet ist, und dass der erste Steckverbinder (110) auf der Maschine (4) zwischen einer ersten, vorgerückten Position, in der er an den zweiten Steckverbinder (116) angeschlossen ist, wenn die beiden Steckverbinder einander gegenüberliegen, und einer zweiten, eingezogenen Position beweglich ist, in der er von dem zweiten Steckverbinder (116) beabstandet ist, wobei die Verlagerungsrichtung des ersten Steckverbinders (110) im Wesentlichen horizontal und zur Ebene der Verbindungsstelle der beiden Steckverbinder (110, 116) senkrecht verläuft.

15. Vorrichtung für das Umsetzen einer Maschine (4) oder dergleichen nach einem der Ansprüche 1 bis 14, **dadurch gekennzeichnet, dass** die Umschaltmittel, die eine Änderung der Quelle zur Versorgung der Maschine (4) mit elektrischer Energie ermöglichen, wenn diese sowohl an einen Arbeitsplatz (2) als auch an die Führungsmittel (34, 36) elektrisch angeschlossen sind, Vergleichsmittel aufweisen, um zu überprüfen, ob der Anschluss der Stromphasen der zukünftigen Versorgungsquelle mit dem Anschluss der Stromphasen der derzeitigen Versorgungsquelle übereinstimmen, bevor eine Umschaltung erfolgt.

16. Vorrichtung für das Umsetzen einer Maschine (4) oder dergleichen nach einem der Ansprüche 1 bis 15, **dadurch gekennzeichnet, dass** jeder Arbeitsplatz (2) mit zwei Anschlägen (8) ausgestattet ist, die mit an der Maschine (4) angeordneten Gegenanschlägen (102) zusammenwirken sollen, und dass die Maschine Befestigungsmittel (106) aufweist, um sie auf mindestens einem der Anschläge (8) zu befestigen.

## Claims

1. Device for moving a machine (4) or the like between several workstations (2), comprising:
- guidance means (34, 36),
- means of supplying the guidance means (34, 36) with electrical power,
- means (46, 54) of mechanical connection between the machine (4) and the guidance means,
- connection means (110, 112, 116) for the electrical connection of the machine (4) to each workstation (2),
**characterised in that** it also comprises:
- means (24) for supporting the machine (4),
- connection means (94, 95) for the electrical connection of the machine (4) to the guidance means (34, 36),
- switching means for modifying the source supplying electrical power to the machine (4) when the latter is connected both to a workstation (2) and to the guidance means (34, 36), and
- management and control means for the movement of the machine (4) and the supply of electrical power thereto.

2. Device for the movement of a machine (4) or the like according to claim 1, **characterised in that** the support means comprise air cushions (24).

3. Device for moving a machine (4) or the like according to claim 2, **characterised in that** the air cushions (24) are supplied with compressed air by the guidance means (34, 36).

4. Device for moving a machine (4) or the like according to one of claims 1 to 3, **characterised in that** the guidance means are overhead guidance means and comprise a crab (36) mounted on a travelling crane (34).

5. Device for moving a machine (4) or the like according to claim 4, **characterised in that** the travelling crane (34) is provided with markers regularly disposed on it and **in that** the crab (36) comprises a reader cooperating with the markers in order to read the position of the crab on the travelling crane (34).

6. Device for moving a machine (4) or the like according to one of claims 4 or 5, **characterised in that** the travelling crane (34) is mounted so as to slide on two substantially parallel rails (40), **in that** each rail (40) is provided with markers regularly disposed on it and **in that** the travelling crane (34) comprises a reader facing each rail, each reader cooperating with the corresponding markers in order to read the position of the travelling claim (34) with respect to the corresponding claim (40).

7. Device for moving a machine (4) or the like according to one of claims 5 or 6, **characterised in that** the markers used are bar codes.

8. Device for moving a machine (4) or the like according to one of claims 4 or 7, **characterised in that** the travelling crane (34) is supplied with electrical power by a system comprising firstly an energised conductor extending longitudinally with respect to the movement of the travelling crane (34) and secondly a shoe fixed to the travelling crane (34) and in permanent contact with the energised conductor.

9. Device for moving a machine (4) or the like according to one of claims 4 to 8, **characterised in that** the connection means for the electrical connection of the machine to the overhead guidance means comprise on the one hand a first connector disposed on the machine and on the other hand a second connector intended to cooperate with the first connector and disposed on the crab (36) mounted on the travelling crane (34), **in that** the first connector is fixed to the machine (4), and **in that** the second connector is able to move on the crab (36) between a first position in which it is connected with the first connector when the two connectors are face to face and a second position in which it is away from the first connector, the direction of movement of the second connector being substantially parallel to the junction plane of the two connectors.

10. Device for moving a machine (4) or the like according to one of claims 1 to 9, **characterised in that** the mechanical connection means comprise firstly a vertical connecting bolt (54) and secondly a housing (46) with a shape corresponding to that of the connecting bolt (54) for receiving the latter, **in that** the vertical connecting bolt (54) is disposed on the guidance means (36) and the housing (46) on the machine (4), or vice versa, and **in that** means (56) are provided for effecting a relative movement of the connecting bolt (54) with respect to its housing (46), in a vertical direction, thus enabling the connecting bolt (54) to enter or leave its housing (46) when the connecting bolt (54) is aligned vertically with its housing (46).

11. Device for moving a machine (4) or the like according to claim 10, **characterised in that** the mechanical connection means also comprise positioning means having firstly a positioning roller (58) and secondly a V-shaped housing (48) intended to receive the positioning roller (58), and **in that** the positioning roller (58) is fixed to the guidance means and the V-shaped housing (48) is fixed to the machine (4) or vice versa.

12. Device for moving a machine (4) or the like according to claim 11, **characterised in that** the positioning roller (58) is able to move between a raised position and a lowered position in which it can cooperate with the V-shaped housing (48) in order to achieve the positioning of the machine (4) with respect to the guidance means (34, 36).

13. Device for moving a machine (4) or the like according to one of claims 11 or 12, **characterised in that** the mechanical connection means also comprise alignment means comprising on the one hand convergent guidance walls (50) and on the other hand an alignment roller (60) intended to move between the said guidance walls (50), **in that** the minimum distance between the guidance walls (50) correspond substantially to the diameter of the alignment roller (60), **in that** the alignment roller (60) is fixed to the guidance means (34, 36) and the guidance walls (50) fixed to the machine (4), and **in that** the connecting bolt (54), the positioning roller (58) in the lowered position and the alignment roller (60) are aligned substantially at the same height.

14. Device for moving a machine (4) or the like according to one of claims 1 to 13, **characterised in that** the connection means for the electrical connection of the machine (4) to a workstation (2) comprise on the one hand a first connector (110) disposed on the machine (4) and on the other hand a fixed second connector (116), intended to cooperate with the first connector (110) and disposed on a vertical wall (100) of the workstation (2), and **in that** the first connector (110) is able to move on the machine (4) between a first advanced position in which it is connected with the second connector (116) when the two connectors are face to face and a second retracted position in which it is away from the second connector (116), the direction of movement of the first connector (110) being substantially horizontal and perpendicular to the junction plane of the two connectors (110, 116).

15. Device for moving a machine (4) or the like according to one of claims 1 to 14, **characterised in that** the switching means make it possible to modify the electrical power supply to the machine (4) when the latter is electrically connected both to a workstation (2) and to the guidance means (34, 36) comprising comparison means in order to verify, before carrying out a switching, that the connection of the electrical current phases of the future supply source corresponds to the connection of the electrical current phases of the present supply.

16. Device for moving a machine (4) or the like according to one of claims 1 to 15, **characterised in that** each workstation (2) is equipped with two stops (8) intended to cooperate with counterstops (102) disposed on the machine (4), and **in that** the machine comprises anchoring means (106) for anchoring it on at least one of the stops (8).
